# EUROPÄISCHE PATENTSCHRIFT

(11) **EP 1 855 913 B1**
(45) Veröffentlichungstag und Bekanntmachung des Hinweises auf die Patenterteilung: **09.06.2010**
(21) Anmeldenummer: 06706008.7
(22) Anmeldetag: 22.02.2006
(51) Int. Cl.: B60N 2/08

(54) **FESTSTELLVORRICHTUNG FÜR EINEN EINSTELLBAREN FAHRZEUGSITZ**
ARRESTER DEVICE FOR AN ADJUSTABLE VEHICLE SEAT
DISPOSITIF DE BLOCAGE POUR UN SIEGE DE VEHICULE REGLABLE

(30) Priorität: 02.03.2005 DE 202005003626 U
(43) Veröffentlichungstag der Anmeldung: 21.11.2007
(73) Patentinhaber: Brose Fahrzeugteile GmbH & Co. KG, Coburg, 96450 Coburg (DE)
(72) Erfinder: SUCK, Wolfgang, 96450 Coburg (DE); BAUDLER, Matthias, 96450 Coburg (DE)
(74) Vertreter: Ninnemann, Detlef
(86) Internationale Anmeldenummer: PCT/DE2006/000339
(87) Internationale Veröffentlichungsnummer: WO 2006/092118

(56) Entgegenhaltungen:
- WO-A-02/40310
- DE-A1- 10 242 825
- DE-U1- 29 700 866

## Beschreibung

Die Erfindung betrifft eine Feststellvorrichtung für einen einstellbaren Fahrzeugsitz nach dem Oberbegriff des Anspruchs 1.

Eine derartige Feststellvorrichtung dient zur Arretierung einer zuvor mittels einer geeigneten Einstellvorrichtung angefahrenen Verstellposition zweier relativ zueinander beweglicher Sitzelemente eines Fahrzeugsitze, insbesondere bei einer Schienenlängsführung zur Einstellung der Sitzposition in Fahrzeuglängsrichtung. Dabei ist eine Schiene der Schienenlängsführung mit der Rastschiene und die andere Schiene der Schienenlängsführung mit einer Sperreinrichtung der Feststellvorrichtung verbunden. Die Feststellvorrichtung läst sich aber auch zur Arretierung anderer Einstellvorrichtungen mit zwei relativ zueinander bewegbaren, insbesondere zueinander verstellbaren Baugruppen verwenden.

Aus der DE 102 42 825 A1 ist eine Arretiereinrichtung einer Längsverstellvorrichtung eines Kraftfahrzeugsitzes mit einer Rastenleiste, die periodisch angeordnete Rastöffnungen und Raststege aufweist, einer der Längsverstellvorrichtung zugeordneten Bodenschiene und einer Sperreinheit bekannt, die ebenfalls einer Sitzschiene der Längsverstellvorrichtung zugeordnet ist. Die Sperreinheit weist unabhängig voneinander in Rastöffnungen einstellbare und gemeinsam ausrastbare Sperrstifte auf, die in einem Führungsteil angeordnet sind, das für jeden Sperrstift eine Stiftbohrung aufweist. Um bei unfallbedingter Belastung ein Hochdrücken der Sperrstifte aus ihrer Arretierstellung heraus zu verhindern, weisen die Sperrstifte einen sich in der Nähe eines unteren Endes der zugehörigen Stiftbohrung befindlichen und als Crashrille oder Riffelung bezeichneten verjüngten Rillenbereich mit ein oder mehreren parallel zueinander angeordneten Einzelrillen auf. Diese Einzelrillen wirken einem Hochdrücken der Sperrstifte aus der Sperrstellung heraus entgegen, in dem sie Verhakungs- und Verkrallungsmöglichkeiten bieten, sobald die Sperrstifte unfallbedingt an den als Sollverformungsstellen dienenden Crashrillen oder Riffelungen ausgebogen sind.

Auf Grund der Haptik besteht beim Betätigen der Sperrstifte zudem das Problem, dass die Sperrstifte nur mit erhöhten Kraftaufwand aus der Arretierung gelöst werden können bzw. verkanten oder sich verhaken.

Ein derartiges Verkanten oder Verhaken der Sperr- oder Verriegelungsstifte ist insbesondere bei den für Feststellvorrichtungen dieser Art verwendeten Stahlführungen auf Grate oder Oberflächenrauhigkeiten auf dem in der Führungseinrichtung geführten Abschnitt des Schaftes der Sperr- oder Verriegelungsstifte bzw. auf der Innenfläche der Führungsbohrungen oder Führungskanäle zurückzuführen.

Aufgabe der vorliegenden Erfindung ist es daher, eine Feststellvorrichtung der eingangsgenannten Art bereitzustellen, bei der sowohl ein Verkanten oder Verhakeln der Verriegelungsstifte als auch ein unbeabsichtigtes Ausrasten der Verriegelungsstifte aus der Rastschiene insbesondere im Crashfall vermieden wird.

Diese Aufgabe wird erfindungsgemäß durch die Merkmale des Anspruchs 1 gelöst.

Durch die Anordnung einer umlaufende Gewindestruktur zumindest an dem durch einen Führungsabschnitt der Führungseinrichtung bewegten Abschnitt ihres zylindrischen Schafts wird ein Verkanten oder Verhakeln der Verriegelungsstifte infolge von Graten oder Oberflächenrauhigkeiten weitestgehend vermieden und gleichzeitig sichergestellt, dass durch die selbsthemmende Wirkung der umlaufenden Gewindestruktur die in die Rastschiene eingerasteten Verriegelungsstifte insbesondere im Crashfall nicht unbeabsichtigt aus der Rastschiene ausrasten.

Vorzugsweise ist der Führungsabschnitt der Führungseinrichtung benachbart zur Rastschiene angeordnet und weist Führungsbohrungen oder Führungskanäle auf, durch die der mit der Gewindestruktur versehene Abschnitt des Schafts der Verriegelungsstifte geführt ist.

Durch die Zuordnung des mit der Gewindestruktur versehenen Abschnitts des Schafts der Verriegelungsstifte zu einem der Rastschiene benachbarten Führungsabschnitt der Führungseinrichtung wird insbesondere bei mehrteiligen Führungsabschnitten der Führungseinrichtung die größtmögliche Wirkung beim Vermeiden eines Verkantens oder Verhakelns der Verriegelungsstifte erzielt und die selbsthemmende Wirkung der in diesem Führungsabschnitt beim Eingriff der Verriegelungsstifte in die Rastschiene verbleibenden umlaufenden Gewindestruktur optimal genutzt.

Zur Erzielung einer verhakelungs- und verkantungsfreien Beweglichkeit der Verriegelungsstifte in ihrem gesamten Bewegungsbereich innerhalb der Führungseinrichtung befindet sich der mit der Gewindestruktur versehene Abschnitt des Schafts eines in eine Rastöffnung eingerasteten Verriegelungsstiftes in der Führungsbohrung oder im Führungskanal und in dem Abschnitt zwischen der Führungsbohrung oder dem Führungskanal und der Rastschiene.

Weisen die Verriegelungsstifte an ihren der Rastschiene zugewandten Enden einen konisch verlaufenden oder kegelstumpfförmigen Abschnitt auf, auf dem die Verriegelungsstifte in eine Rastöffnung gleiten können, so schließt sich der mit der Gewindestruktur versehene Abschnitt des Schafts vorzugsweise unmittelbar an den konisch verlaufenden oder kegelstumpfförmigen Abschnitt an.

Die mit einer Anwendung der erfindungsgemäßen Lösung verbundenen Vorteile können auch bei solchen Verriegelungsstiften eingesetzt werden, die zur Erzielung eines zuverlässigen Ausgleich der in der Feststellvorrichtung auftretenden Toleranzen bei geringem Aufwand und geringem Platzbedarf an ihren der Rastschiene zugewandten Enden des konisch verlaufenden oder kegelstumpfförmigen Abschnitts des Schafts zusätzlich eine Einführschräge aufweisen, auf der die Verriegelungsstifte in eine Rastöffnung gleiten können, so dass sich stets zwei Verriegelungsstifte in entgegengesetzter Richtung an einem Raststeg abstützen.

Vorzugsweise ist die Gewindestruktur zwischen dem konisch verlaufenden oder kegelstumpfförmigen Abschnitt des Schafts der Verriegelungsstifte und einer Abstützung der Verriegelungsstifte für eine Vorspannfeder ausgebildet, so dass der gesamte beim Ein- und Ausrasten der Verriegelungsstifte innerhalb der Führungseinrichtung geführte Abschnitt des Schafts der Verriegelungsstifte mit der Gewindestruktur versehen ist.

Zur Unterstützung der selbsthemmenden Wirkung des mit der Gewindestruktur versehenen Abschnitts des Schafts sind die Verriegelungsstifte mit minimalem Spiel in den Führungsbohrungen oder Führungskanälen des benachbart zur Rastschiene angeordneten Führungsabschnitts der Führungseinrichtung geführt und die Gewindestruktur aus einem umlaufenden Feingewinde ausgebildet.

Durch die Ausbildung der Gewindestruktur als umlaufendes Feingewinde ist sowohl eine weitestgehend verhakelungs- und verkantungsfreie Bewegung der Verriegelungsstifte als auch eine passgenaue Führung der Gewindestifte in den Führungsbohrungen oder Führungskanälen gewährleistet und der selbsthemmende Effekt der Gewindestruktur für die Verriegelungsstifte sichergestellt.

Zur weiteren Strukturierung kann die Gewindestruktur des Schaftes der Verriegelungsstifte mit zusätzlichen, in Längsrichtung des Schafts parallel oder diagonal zur Schaftachse verlaufenden, auch abschnittsweise vorgesehenen Rillen versehen werden.

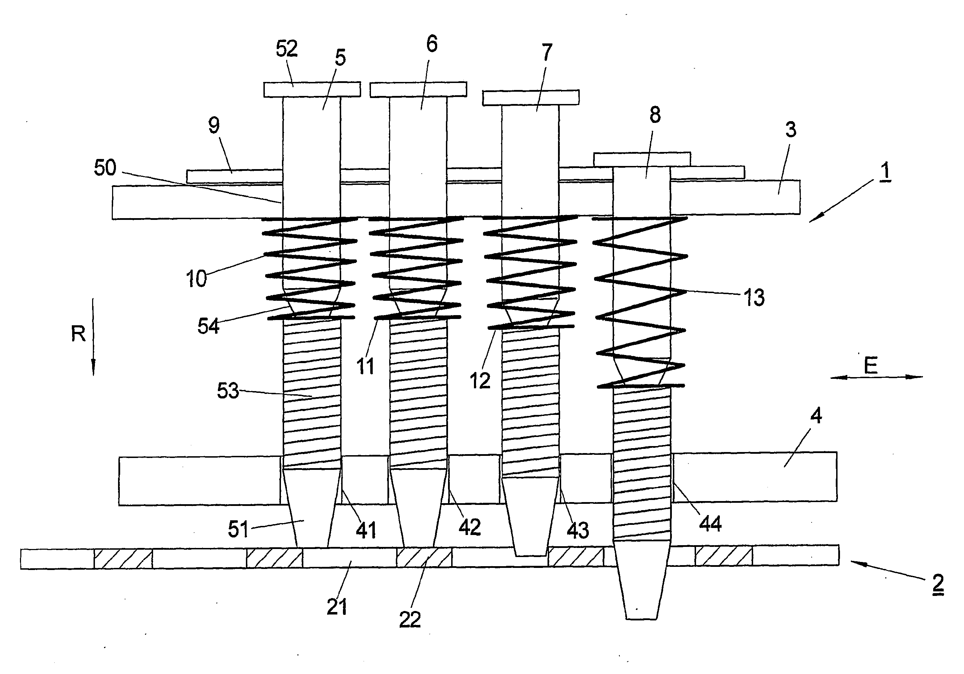

Anhand der einzigen Figur der Zeichnung, in der ein Längsschnitt durch eine Feststellvorrichtung mit einer Rastschiene und einer der Rastschiene zugeordneten Verriegelungseinheit dargestellt ist, soll der der Erfindung zugrundeliegende Gedanke näher erläutert werden.

Die in der Zeichnung dargestellte Feststellvorrichtung weist eine Verriegelungseinheit 1, die beispielsweise der Oberschiene einer Sitzlängsverstellung zugeordnet und mit dieser fest verbunden ist, sowie eine Rastschiene 2 auf, die dementsprechend der Unterschiene der Sitzlängsverstellung zugeordnet und fest mit dieser verbunden ist. Die Rastschiene 2 enthält mehrere periodisch angeordnete Rastöffnungen 21, die durch Raststege 22 voneinander getrennt sind.

Die oberhalb der Rastschiene 2 angeordnete Verriegelungseinheit 1 umfasst mehrere, im vorliegenden Ausführungsbeispiel vier, Verriegelungsstifte 5, 6, 7, 8, die in einem konstanten Abstand zueinander angeordnet sind, wobei der Abstand der Mittelachsen benachbarter Verriegelungsstifte 5, 6, 7, 8 kleiner ist als die Periode der Rastöffnung 21 und Raststege 22 der Rastschiene 2. Die Verriegelungsstifte 5 bis 8 weisen einen zylindrischen Schaft 50 auf, der an seinem oberen Ende durch einen Bund 52 abgeschlossen ist und an seinem unteren Ende in einen konischen oder kegelstumpfförmigen Abschnitt 51 übergeht.

Die Schäfte 50 der Verriegelungsstifte 5, 6, 7, 8 sind in einer oberen Führung 3 und einer unteren Führung 4 einer Führungseinrichtung in Einrastrichtung R der Verriegelungsstifte 5, 6, 7, 8 beweglich geführt, wobei als Führungsmittel in der unteren Führung 4 eine der Anzahl der Verriegelungsstifte 5, 6, 7, 8 entsprechende Anzahl von Führungsbohrungen oder Führungskanälen 41, 42, 43, 44 vorgesehen ist, in denen die Schäfte 50 der Verriegelungsstifte 5, 6, 7, 8 passgenau geführt sind.

Zwischen der oberen Führung 3 und einer Einkerbung 54 der Verriegelungsstifte 5, 6, 7, 8 sind Druckfedern 10, 11, 12, 13 angeordnet, die die den Rastöffnungen 21 der Rastschiene 2 zugeordneten Verriegelungsstifte 5, 6, 7, 8 in Richtung der Rastöffnungen 21 in Einrastrichtung R vorspannen.

Zwischen dem oberen Bund 52 der Verriegelungsstifte 5 bis 8 und der oberen Führung 3 der Führungseinrichtung ist eine Entriegelungsschiene 9 angeordnet, die bei einer Bewegung entgegen der Einrastrichtung R die in einer Verriegelungsstellung befindlichen Verriegelungsstifte 5 bis 8 aus der Verriegelung mit der Rastschiene 2 zieht, so dass die relativ zueinander verstellbaren Teile des Fahrzeugsitzes für einen Verstellvorgang freigegeben werden. Dabei greift die Entriegelungsschiene 9 an allen Verriegelungsstiften 5 bis 8 gemeinsam an, bewegt aber lediglich die in einer Verriegelungsstellung befindlichen Verriegelungsstifte 5 bis 8 in die Freigabestellung.

Bei dem in der Zeichnung dargestellten Verriegelungszustand befindet sich der Verriegelungsstift 8 in einer Rastöffnung 21, während sich der Verriegelungsstift 7 mit einer Flanke seines konisch verlaufenden oder kegelstumpfförmigen Abschnitts 51 des Schaftes 50 oder einer sich daran anschließenden Einführschräge an der Innenseite eines Raststeges 22 der Rastschiene 2 abstützt. Dagegen liegen die Verriegelungsstifte 5 und 6 mit der Stirnseite ihres konisch verlaufenden oder kegelstumpfförmigen Abschnitts 51 infolge der Federvorspannung an der Oberseite zweier benachbarter Raststege 22 an.

Bei der schematischen Darstellung der Zeichnungsfigur wäre noch eine geringfügige Bewegung der Feststellvorrichtung in der Verstell- oder Einrastrichtung E vorhanden, die aber durch an unterschiedlichen Seiten der Rasten 22 der Rastschiene 2 anliegende konisch verlaufende oder kegelstumpfförmige Abschnitte 51 der Verriegelungsstifte 5 bis 8 vermieden werden kann.

Beispiele für einen in Verstell- oder Einrastrichtung E spielfreien Eingriff der Verriegelungsstifte 5 bis 8 in die Rastschiene 2 sind der DE 299 10 720 U1 zu entnehmen. Bei dieser bekannten Anordnung ist der Neigungswinkel der konisch verlaufenden oder kegelstumpfförmigen Abschnitte 51 der Verriegelungsstifte 5 bis 8 so gewählt, dass die Verriegelungsstifte 5 bis 8 durch crashbedingte, entlang der Einstellrichtung E wirkende sehr große Kräfte nicht aus den ihnen zugeordneten Rastöffnungen 21 herausgedrückt werden können, wenn der betreffende Verriegelungsstift 5 bis 8 sich nicht mit seinem Schaft 50 innerhalb der Rastöffnung 21 befindet, sondern mit Flanke des konisch verlaufenden oder kegelstumpfförmigen Abschnitts 51 an einem Raststeg 22 der Rastschiene 2 anliegt.

Wird zur Entriegelung der Feststellvorrichtung die Entriegelungsschiene 9 entgegen der Einstellrichtung R bewegt, so legt sie sich zunächst an den Bund 52 des Verriegelungsstiftes 8 an und bewegt diesen entgegen der Einrastrichtung R und gegen die Vorspannkraft der Druckfeder 13 aus seinem Eingriff in die Rastschiene 2 heraus bis die Entriegelungsschiene 9 an der Unterseite des Bundes 52 des Verriegelungsstiftes 7 anliegt und diesen ebenfalls aus der Verriegelungsstellung herauszieht.

Da es infolge der passgenauen Führung der Verriegelungsstifte 5 bis 8 in den Führungsbohrungen bzw. Führungskanälen 41 bis 44 leicht zu Verkantungen oder einem Verhakeln kommen kann, insbesondere wenn die durch die konischen oder kegelstumpfförmigen Abschnitte 51 gebildeten Flanken an einem Raststeg 22 der Rastschiene 2 anliegen und zusätzliche Grate in den Führungsbereichen vorhanden sind, ist der Abschnitt der Schäfte 50 der Verriegelungsstifte 5 bis 8 zwischen der Einkerbung 54 und dem Beginn des konischen oder kegelstumpfförmigen Abschnitts 51 erfindungsgemäß mit einer Gewindestruktur 53 versehen. Diese Gewindestruktur 53 verhindert nicht nur ein Verhaken bzw. Verkanten der Verriegelungsstifte 5 bis 8 in den Führungsbohrungen bzw. Führungskanälen 41 bis 44 der unteren Führung 4, sondern bewirkt auch insbesondere im Crashfall auch eine Selbsthemmung der Verriegelungsstifte 5 bis 8, wenn ein Verriegelungsstift 5 bis 8 in eine Rastöffnung 21 der Rastschiene 2 eingerastet ist bzw. mit einer Flanke seines konischen oder kegelstumpfförmigen Abschnitts 51 an einem Raststeg 22 der Rastschiene 2 anliegt.

Die Gewindestrukturen 53 können beispielsweise als Feingewinde ausgebildet werden, das eine hohe Passgenauigkeit der Verriegelungsstifte 5, 6, 7, 8 in der unteren Führung 4 der Führungseinrichtung zulässt.

Zur weiteren Strukturierung können die Gewindestrukturen 53 der Verriegelungsstifte 5, 6, 7, 8 mit zusätzlichen, in Längsrichtung ihrer Schäfte parallel oder diagonal zur Schaftachse verlaufenden, auch abschnittsweise vorgesehenen Rillen versehen werden.

### Bezugszeichenliste

- 1: Verriegelungseinheit
- 2: Rastschiene
- 3: obere Führung der Führungseinrichtung
- 4: untere Führung der Führungseinrichtung
- 5, 6, 7, 8: Verriegelungsstifte
- 9: Entriegelungsschiene
- 10, 11, 12, 13: Druckfeder
- 21: Rastöffnung
- 22: Raststeg
- 41, 42, 43, 44: Führungsbohrungen oder Führungskanäle
- 50: zylindrischer Schaft
- 51: konischer oder kegelstumpfförmiger Abschnitt
- 52: Bund
- 53: Gewindestruktur
- 54: Einkerbung
- R: Einrastrichtung
- E: Verstell- oder Einrastrichtung

## Patentansprüche

1. Feststellvorrichtung für einen einstellbaren Fahrzeugsitz mit mindestens einer parallel zu einer Einstellrichtung verlaufenden Rastschiene, die periodisch angeordnete Raststege und Rastöffnungen aufweist, und mit einer Verriegelungseinheit, die mehrere unabhängig voneinander in einer Führungseinrichtung entlang einer Einrastrichtung geführte, in die Rastöffnungen bewegbare und in dieser Richtung vorgespannte Verriegelungsstifte mit einem zylindrischen Schaft aufweist,
**dadurch gekennzeichnet,**
**dass** die Verriegelungsstifte (5 - 8) zumindest an dem durch einen Führungsabschnitt (4) der Führungseinrichtung (1) bewegten Abschnitt ihres zylindrischen Schafts (50) eine umlaufende Gewindestruktur (53) aufweisen.

2. Feststellvorrichtung nach Anspruch 1, **dadurch gekennzeichnet, dass** der Führungsabschnitt (4) der Führungseinrichtung (1) benachbart zur Rastschiene (2) angeordnet ist und Führungsbohrungen oder Führungskanäle (41 - 44) aufweist, durch die der mit der Gewindestruktur (53) versehene Abschnitt des Schafts (50) der Verriegelungsstifte (5 - 8) geführt ist.

3. Feststellvorrichtung nach Anspruch 2, **dadurch gekennzeichnet, dass** sich der mit der Gewindestruktur (53) versehene Abschnitt des Schafts (50) eines in eine Rastöffnung (21) eingerasteten Verriegelungsstiftes (5 - 8) in der Führungsbohrung oder im Führungskanal (41 - 44) und in dem Bereich zwischen der Führungsbohrung oder dem Führungskanal (41 - 44) und der Rastschiene (2) befindet.

4. Feststellvorrichtung nach mindestes einem der voranstehenden Ansprüche, **dadurch gekennzeichnet, dass** die Verriegelungsstifte (5 - 8) an ihren der Rastschiene (2) zugewandten Enden einen konisch verlaufenden oder kegelstumpfförmigen Abschnitt (51) aufweisen, auf dem die Verriegelungsstifte (5 - 8) in eine Rastöffnung (21) gleiten.

5. Feststellvorrichtung nach Anspruch 4, **dadurch gekennzeichnet, dass** der mit der Gewindestruktur (53) versehene Abschnitt des Schafts (50) unmittelbar an den konisch verlaufenden oder kegelstumpfförmigen Abschnitt (51) anschließt.

6. Feststellvorrichtung nach Anspruch 4, **dadurch gekennzeichnet, dass** der mit der Gewindestruktur (53) versehene Abschnitt des Schafts (50) an dem durch den Führungsabschnitt (4) der Führungseinrichtung (1) bewegten Abschnitt des zylindrischen Schafts (50) vorgesehen ist.

7. Feststellvorrichtung nach Anspruch 4, **dadurch gekennzeichnet, dass** die Gewindestruktur (53) zwischen dem konisch verlaufenden oder kegelstumpfförmigen Abschnitt (51) des Schafts (50) der Verriegelungsstifte (5 - 8) und einer Abstützung (54) der Verriegelungsstifte (5 - 8) für eine Vorspannfeder (10 - 13) ausgebildet ist.

8. Feststellvorrichtung nach mindestens einem der voranstehenden Ansprüche, **dadurch gekennzeichnet, dass** die Verriegelungsstifte (5 - 8) quer zur Einrastrichtung beweglich gelagert sind und dass der konisch verlaufende oder kegelstumpfförmige Abschnitt (51) des Schafts (50) der Verriegelungsstifte (5 - 8) an seinem der Rastschiene (2) zugewandten Ende eine Einführschräge aufweist, auf der die Verriegelungsstifte (5 - 8) in eine Rastöffnung (21) der Rastschiene (2) gleiten können.

9. Feststellvorrichtung nach mindestens einem der voranstehenden Ansprüche, **dadurch gekennzeichnet, dass** der die Gewindestruktur (53) enthaltende Abschnitt des Schafts (50) der Verriegelungsstifte (5 - 8) mit minimalem Spiel in den Führungsbohrungen oder Führungskanälen (41 - 44) des benachbart zur Rastschiene (2) angeordneten Führungsabschnitts (4) der Führungseinrichtung (1) geführt ist.

10. Feststellvorrichtung nach mindestens einem der voranstehenden Ansprüche, **dadurch gekennzeichnet, dass** die Gewindestruktur (53) aus einem Feingewinde besteht.

11. Feststellvorrichtung nach mindestens einem der voranstehenden Ansprüche, **dadurch gekennzeichnet, dass** die Gewindestruktur (53) mit zusätzlichen, in Längsrichtung des Schafts (50) verlaufenden Rillen versehen ist.

12. Feststellvorrichtung nach Anspruch 11, **dadurch gekennzeichnet, dass** die in Längsrichtung des Schafts (50) verlaufenden Rillen abschnittsweise vorgesehen sind.

## Claims

1. An arrester device for an adjustable vehicle seat with at least one locking rail running parallel to an adjusting direction, which comprises periodically arranged locking lugs and locking openings and with a locking unit which comprises a plurality of locking pins with a cylindrical shaft, which are guided independently of one another in a guide device in a locking direction, displaceable in the locking openings and pretensioned in said direction, **characterized in that** the locking pins (5-8) comprise a circumferential thread structure (53) at least on the portion of the cylindrical shaft (50) thereof running through a guide portion (4) of the guide device (1).

2. The arrester device as claimed in claim 1, **characterized in that** the guide portion (4) of the guide device (1) is arranged adjacent to the locking rail (2) and comprises guide bores or guide channels (41-44), through which the portion of the shaft (50) of the locking pins (5-8) provided with the thread structure (53) is guided.

3. The arrester device as claimed in claim 2, **characterized in that** the portion of the shaft (50) of a locking pin (5-8) provided with the thread structure (53) engaged in a locking opening (21), is located in the guide bore or in the guide channel (41-44) and in the region between the guide bore or the guide channel (41-44) and the locking rail (2).

4. The arrester device as claimed in at least one of the preceding claims, **characterized in that** the locking pins (5-8) comprise at the ends thereof facing the locking rail (2) a conically extending portion or frustoconical portion (51), on which the locking pins (5-8) slide into a locking opening (21).

5. The arrester device as claimed in claim 4, **characterized in that** the portion of the shaft (50) provided with the thread structure (53) is directly attached to the conically extending portion or frustoconical portion (51).

6. The arrester device as claimed in claim 4, **characterized in that** the portion of the shaft (50) provided with the thread structure (53) is provided on the portion of the cylindrical shaft (50) running through the guide portion (4) of the guide device (1).

7. The arrester device as claimed in claim 4, **characterized in that** the thread structure (53) between the conically extending portion or frustoconical portion (51) of the shaft (50) of the locking pins (5-8) and a support (54) of the locking pins (5-8) is configured for a pretensioning spring (10-13).

8. The arrester device as claimed in at least one of the preceding claims, **characterized in that** the locking pins (5-8) are movably mounted transversely to the locking direction and **in that** the conically extending portion or frustoconical portion (51) of the shaft (50) of the locking pins (5-8) comprises an insertion bevel on its end facing the locking rail (2), on which the locking pins (5-8) are able to slide into a locking opening (21) of the locking rail (2).

9. The arrester device as claimed in at least one of the preceding claims, **characterized in that** the portion of the shaft (50) of the locking pins (5-8) containing the thread structure (53) is guided with minimal clearance in the guide bores or guide channels (41-44) of the guide portion (4) of the guide device (1) arranged adjacent to the locking rail (2).

10. The arrester device as claimed in at least one of the preceding claims, **characterized in that** the thread structure (53) consists of a fine-pitch thread.

11. The arrester device as claimed in at least one of the preceding claims, **characterized in that** the thread structure (53) is provided with additional grooves, extending in the longitudinal direction of the shaft (50).

12. The arrester device as claimed in claim 11, **characterized in that** the grooves, extending in the longitudinal direction of the shaft (50), are provided periodically.

## Revendications

1. Dispositif d'immobilisation pour un siège de véhicule réglable, comprenant au moins un rail d'enclenchement s'étendant parallèlement à une direction de réglage, qui comporte des barrettes d'enclenchement et des ouvertures d'enclenchement agencées périodiquement, et comprenant une unité de verrouillage, qui comprend plusieurs tiges de verrouillage, avec un fût cylindrique, guidées indépendamment les unes des autres dans un système de guidage le long d'une direction d'enclenchement, déplaçables jusque dans les ouvertures d'enclenchement et précontraintes dans cette direction,
**caractérisé en ce que**
les tiges de verrouillage (5-8) comprennent une structure à pas de vis périphérique (53), au moins sur le tronçon de leur fût cylindrique (50) déplacé à travers un tronçon de guidage (4) du système de guidage (1).

2. Dispositif d'immobilisation selon la revendication 1, **caractérisé en ce que** le tronçon de guidage (4) du système de guidage (1) est agencé au voisinage du rail d'enclenchement (2) et comporte des perçages de guidage ou des canaux de guidage (41-44) à travers lesquels est guidé le tronçon, pourvu de la structure à pas de vis (53), du fût (50) des tiges de verrouillage (5-8).

3. Dispositif d'immobilisation selon la revendication 2, **caractérisé en ce que** le tronçon, pourvu de la structure à pas de vis (53), du fût (50) d'une tige de verrouillage (5-8) enclenché dans une ouverture d'enclenchement (21) se trouve dans le perçage de guidage ou dans le canal de guidage (41-44) et dans la région entre le perçage de guidage ou le canal de guidage (41-44) et le rail d'enclenchement (2).

4. Dispositif d'immobilisation selon l'une au moins des revendications précédentes, **caractérisé en ce que** les tiges de verrouillage (5-8) comportent, à leurs extrémités tournées vers le rail de verrouillage (2), un tronçon (51) qui s'étend sous forme conique ou sous forme tronconique, sur lequel coulissent les tiges de verrouillage (5-8) jusque dans une ouverture d'enclenchement (21).

5. Dispositif d'immobilisation selon la revendication 4, **caractérisé en ce que** le tronçon, pourvu de la structure à pas de vis (53), du fût (50) se raccorde directement au tronçon (51) qui s'étend sous forme conique ou sous forme tronconique.

6. Dispositif d'immobilisation selon la revendication 4, **caractérisé en ce que** le tronçon, pourvu de la structure à pas de vis (53), du fût (50), est prévu sur le tronçon du fût cylindrique (50) déplacé à travers le tronçon de guidage (4) du système de guidage (1).

7. Dispositif d'immobilisation selon la revendication 4, **caractérisé en ce que** la structure à pas de vis (53) est réalisée entre le tronçon (51), qui s'étend sous forme conique ou sous forme tronconique, du fût (50) des tiges de verrouillage (5-8) et un appui (54) des tiges de verrouillage (5-8) pour un ressort de précontrainte (10-13).

8. Dispositif d'immobilisation selon l'une au moins des revendications précédentes, **caractérisé en ce que** les tiges de verrouillage (5-8) sont montées déplaçables transversalement à la direction d'enclenchement, et **en ce que** le tronçon (51), qui s'étend sous forme conique ou sous forme tronconique, du fût (50) des tiges de verrouillage (5-8) comporte, à son extrémité tournée vers le rail d'enclenchement (2), une pente d'introduction sur laquelle les tiges de verrouillage (5-8) peuvent coulisser jusque dans une ouverture d'enclenchement (21) du rail d'enclenchement (2).

9. Dispositif d'immobilisation selon l'une au moins des revendications précédentes, **caractérisé en ce que** le tronçon, contenant la structure à pas de vis (53), du fût (50) des tiges de verrouillage (5-8) est guidé avec un jeu minimal dans les perçages de guidage ou les canaux de guidage (41-44) du tronçon de guidage (4), agencés au voisinage du rail d'enclenchement (2), du système de guidage (1).

10. Dispositif d'immobilisation selon l'une au moins des revendications précédentes, **caractérisé en ce que** la structure à pas de vis (53) est constituée par un pas de vis fin.

11. Dispositif d'immobilisation selon l'une au moins des revendications précédentes, **caractérisé en ce que** la structure à pas de vis (53) est pourvue de rainures supplémentaires, qui s'étendent dans la direction longitudinale du fût (50).

12. Dispositif d'immobilisation selon la revendication 11, **caractérisé en ce que** les rainures qui s'étendent dans la direction longitudinale du fût (50) sont prévues par tronçons.
